# EUROPEAN PATENT SPECIFICATION

(11) **EP 3 147 019 B1**
(45) Date of publication and mention of the grant of the patent: **26.01.2022**
(21) Application number: 16188401.0
(22) Date of filing: 12.09.2016
(51) Int. Cl.: B01D 53/047, C01B 3/56

(54) **METHOD AND DEVICE FOR SEPARATING A GAS MIXTURE ACCORDING TO A PRESSURE SWING ADSORPTION PROCESS**
VERFAHREN UND VORRICHTUNG ZUR TRENNUNG EINER GASMISCHUNG GEMÄSS EINEM DRUCKWECHSEL-ADSORPTIONSVERFAHREN
PROCÉDÉ ET DISPOSITIF POUR SÉPARER UN MÉLANGE GAZEUX SUIVANT UN PROCÉDÉ D'ADSORPTION PAR PRESSION OSCILLANTE

(30) Priority: 14.09.2015 NL 2015435
(43) Date of publication of application: 29.03.2017
(73) Proprietor: Green Vision Holding B.V., 6827 AV Arnhem (NL)
(72) Inventor: Westendorp, Gerard, 6671 BL Zetten (NL)
(74) Representative: van Dam, Vincent

(56) References cited:
- EP-A1- 2 407 232
- WO-A1-2014/104891
- US-A- 5 096 470

## Description

The invention relates to a method for separating a first gas mixture (A, C) of a first gas (A) and at least one second gas (C) into a first gas (A) and at least one second gas (C) according to a pressure swing adsorption process (PSA process), comprising of adsorbing at least the second gas (C) in an adsorption mass provided in each vessel of a number of vessels, wherein the adsorption strength for the first gas (A) is smaller than the adsorption strength for the second gas (C) and wherein each vessel has at least one inlet and one outlet, wherein in each of said vessels the following steps are to be distinguished of:
(i) admitting the gas mixture for a predetermined period into a first vessel via an inlet of said vessel, and discharging a separated product gas via an outlet of said vessel, followed by admitting the gas mixture into a second vessel while continuing the discharge of the product gas from the first vessel, followed by (ii) discharging purge gas from the first vessel via its outlet, (iii) discharging off-gas from the first vessel via its inlet, (iv) admitting purge gas into the first vessel via its outlet, and discharging off-gas from said vessel via its inlet, and (v) admitting a separated product gas into the first vessel until the pressure in the first vessel has reached a predetermined value, after which admission of the gas mixture into the first vessel begins, and the steps are repeated beginning with step (i).

Separating a gas mixture by means of a PSA process is per se known, as for example from WO 2004/104891 A1.

The method is for instance applied to separate hydrogen gas of a very high purity (99.999%) from so-called reformate, a mixture of hydrogen gas (H₂), carbon dioxide (CO₂), carbon monoxide (CO) and methane (CH₄).

During separation of a gas mixture of a first gas (A) and at least one second gas (C) by means of a PSA process use is made of an adsorption mass of a selective adsorbent, wherein the adsorption strength for the first gas (A) is smaller than the adsorption strength for the second gas (C). The second gas is thus adsorbed to the adsorption mass in the respective vessel at a relatively high pressure, after which the first gas, which has not been adsorbed, can be discharged from the vessel.

The adsorption mass is regenerated periodically, for which purpose a purge gas comprising substantially pure product gas is admitted at a relatively low pressure into the respective vessel. The necessary use of product gas as purge gas for regenerating the adsorption mass results in an upper limit to the value of the yield of product gas which can be realized with a separation according to the PSA process.

It is an object of the invention to provide a method for separating a gas mixture according to a PSA process wherein the upper limit of the yield of a product gas is raised while maintaining the standards of purity set for the product gas.

This object is achieved, and other advantages realized, with a method of the type stated in the preamble, wherein according to the invention prior to step (i) a third gas (B) is added to the gas mixture, wherein the adsorption strength of the third gas is greater than the adsorption strength of the first gas (A) and smaller than the adsorption strength of the second gas (C).

It may be expected that, as a result of adding a third gas (B) to a gas mixture of a first constituent (A) and at least one other constituent (C), the yield of the first constituent (A) will decrease during separation of this gas mixture because the yield of the first constituent (A) is diluted by the third constituent (B).

Surprisingly however, it has been found that the yield of the first constituent (A) increases when the third constituent (B) is added, at least when the adsorption strength of the third gas is greater than the adsorption strength of the first gas (A) and smaller than the adsorption strength of the second gas (C). An explanation for this phenomenon is sought in the effectiveness of the third gas (B) in the step (iii) and the step (iv) of admitting purge gas into the respective vessel, during which step adsorbed third gas (B) is desorbed first and during this desorption entrains adsorbed gas molecules of the second gas (C) and thus enhances the desorption of the second gas.

In an embodiment of the method according to the invention the third gas is an inert gas. This embodiment provides the practical advantage that in a large number of application options for the separated product gas (A) the presence of a quantity of inert gas therein will not detract from the requirements of purity set for the product gas.

In an advantageous embodiment of the method according to the invention wherein the gas mixture for separating is provided as reformate from a reformer which is supplied with a feed gas containing hydrocarbon, the third gas is nitrogen gas (N₂).

According to this method the reformate from the reformer, which comprises a mixture of hydrogen gas (H₂), carbon dioxide (CO₂), carbon monoxide (CO) and residues of methane (CH₄), is supplied mixed with nitrogen gas (N₂), after which the thus constituted mixture is separated according to a PSA procedure into a product gas comprising hydrogen gas and nitrogen gas, and an off-gas comprising the other constituents and residues of nitrogen gas. The product gas is highly suitable for use as ambient gas in a process space for the production of float glass.

In this embodiment of the method the nitrogen gas (N₂) is for instance added to the reformate from the reformer.

By way of alternative the nitrogen gas (N₂) can be added to the feed gas of the reformer, in which case use can be made of nitrogen gas (N₂) forming a constituent of the off-gas discharged during at least one of the steps (iii) and (iv) .

In yet another embodiment the nitrogen gas (N₂) forms a constituent of a mixture of the product gas (H₂) and nitrogen gas (N₂) following use of this mixture as oxygen-free ambient gas in a process space.

This latter embodiment is particularly advantageous in the production of float glass, wherein the product gas mixture is used as oxygen-free ambient gas in a process space and subsequently at least partially fed back from the process space for reuse in separating a gas mixture containing hydrogen gas.

The invention also relates to a device for producing a product gas mixture of nitrogen gas (N₂) and hydrogen gas (H₂) from nitrogen gas (N₂) and a hydrocarbon gas according to the above described method, comprising a nitrogen source, a reformer for converting the hydrocarbon gas to a first gas mixture of hydrogen gas (H₂) and at least one of the gases carbon monoxide (CO), carbon dioxide (CO₂) and methane (CH₄), a separating device for separating the first gas mixture according to a pressure swing adsorption process (PSA process) into hydrogen gas (H₂) and at least one of the gases carbon monoxide (CO), carbon dioxide (CO₂) and methane (CH₄), comprising a number of vessels, wherein each vessel has at least one inlet and one outlet, and an adsorption mass is provided in each of these vessels for adsorbing at least one of the gases carbon monoxide (CO), carbon dioxide (CO₂) and methane (CH₄), and a product gas space for admitting therein the nitrogen gas (N₂) and the hydrogen gas (H₂) in order to obtain the product gas mixture of nitrogen gas (N₂) and hydrogen gas (H₂), which device according to the invention is provided with means for adding nitrogen gas (N₂) to the first gas mixture.

In an embodiment the means for adding are provided by conduit means for guiding nitrogen gas (N₂) from the nitrogen source to the inlet of the at least one vessel.

In another embodiment the means for adding are provided by conduit means for guiding at least a part of the gas mixture out of the product gas space to the inlet of the at least one vessel.

In yet another embodiment the means for adding are provided by conduit means for guiding at least part of the gas mixture out of the product gas space to the reformer.

In a subsequent embodiment the means for adding are provided by conduit means for guiding at least a part of off-gas discharged from the outlets to the reformer.

In an embodiment the number of vessels comprises at least two, and for instance four vessels.

The invention will be elucidated hereinbelow on the basis of an exemplary embodiment, with reference to the drawings.

In the drawings
Fig. 1 is a schematic representation of a first embodiment of a method and device according to the invention for producing a product gas mixture of nitrogen gas (N₂) and hydrogen gas (H₂) from nitrogen gas (N₂) and a hydrocarbon gas,
Fig. 2 is a schematic representation of a second embodiment of a method and device according to the invention for producing a product gas mixture of nitrogen gas (N₂) and hydrogen gas (H₂),
Fig. 3 is a schematic representation of a third embodiment of a method and device according to the invention for producing a product gas mixture of nitrogen gas (N₂) and hydrogen gas (H₂),
Fig. 4 is a schematic representation of a fourth embodiment of a method and device according to the invention for producing a product gas mixture of nitrogen gas (N₂) and hydrogen gas (H₂), and
Fig. 5 is a graphic representation of measured purity as a function of the yield of a gas mixture of hydrogen gas separated from a reformate according to the invented method.

Corresponding components are designated in the figures with the same reference numerals.

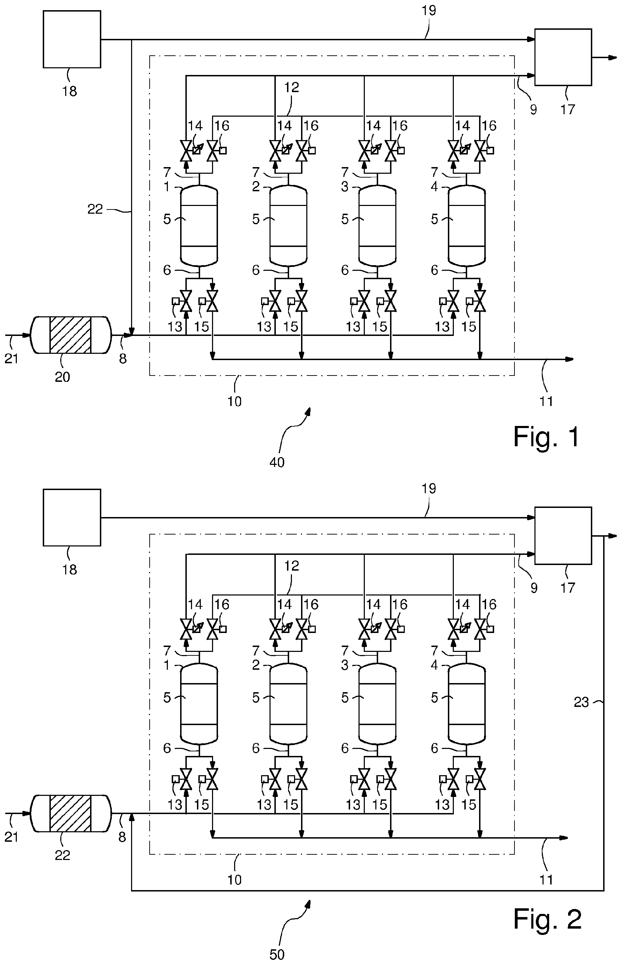

Fig. 1 is a schematic representation of a method and device 40 for separation, using a PSA apparatus 10, of hydrogen gas from a reformate from a reformer 20 with an inlet conduit 21 for admitting a hydrocarbon gas, in particular methane. PSA apparatus 10 comprises four vessels 1, 2, 3, 4 which each have an adsorption bed with an adsorption mass 5, and an inlet 6 and an outlet 7. Vessels 1, 2, 3, 4 are connected to four parallel conduits, i.e. a distribution conduit 8 for the gas mixture to be separated, a manifold 9 for the separated product gas (hydrogen gas), a manifold 11 for the separated off-gas (carbon monoxide, carbon dioxide, methane and residues of hydrogen), and a distribution conduit 12 for equalization gas and purge gas. Present in each of the conduits 8, 9, 11, 12 for each of the respective vessels 1, 2, 3, 4 is a feed valve 13, a product valve 14, an off-gas valve 15 and an equalization and purge valve 16. Manifold 9 is connected to a product gas space 17 in which the separated hydrogen is mixed with nitrogen gas from a nitrogen source 18 which is coupled to product gas space 17 by a transport conduit 19. From nitrogen source 18 a second transport conduit 22 leads to distribution conduit 8 for the purpose of adding nitrogen gas to the gas mixture to be separated coming from reformer 20 in order to thus be able to increase the yield of the product gas from PSA apparatus 10 according to the invention.

Fig. 2 is a schematic representation of a second method and device 50 for separating hydrogen gas from a reformate from a reformer 20 using a PSA apparatus 10. In addition to the parts elucidated above, the figure shows a transport conduit 23 which leads from product gas space 17 to distribution conduit 8 for the purpose of adding nitrogen gas to the gas mixture to be separated coming from the reformer in order to thus be able to increase the yield of the product gas from PSA apparatus 10 according to the invention.

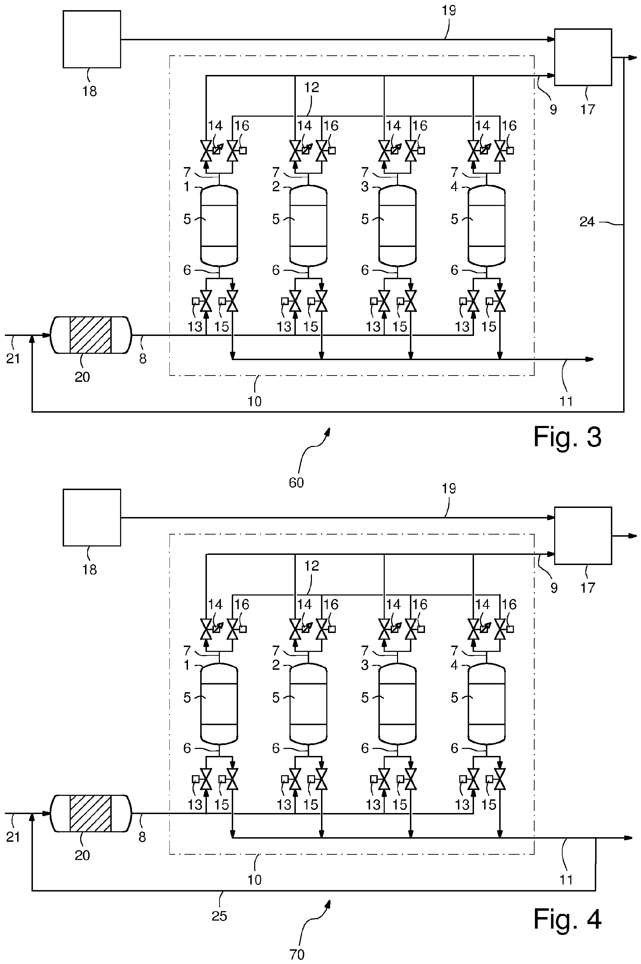

Fig. 3 is a schematic representation of a third method and device 60 for separating hydrogen gas from a reformate from a reformer 20 using a PSA apparatus 10. In addition to the parts elucidated above, the figure shows a transport conduit 24 which leads from product gas space 17 to inlet conduit 21 of reformer 20 for the purpose of adding nitrogen gas to the hydrocarbon gas to be supplied to reformer 20 in order to thus be able to increase the yield of the product gas from PSA apparatus 10 according to the invention.

Fig. 4 is a schematic representation of a fourth method and device 70 for separating hydrogen gas from a reformate from a reformer 20 using a PSA apparatus 10. In addition to the parts elucidated above, the figure shows a transport conduit 25 which leads from manifold 11 to inlet conduit 21 of the reformer for the purpose of adding off-gas containing nitrogen gas from PSA apparatus 10 to the hydrocarbon gas to be supplied to reformer 20 in order to thus be able to increase the yield of the product gas from PSA apparatus 10 according to the invention.

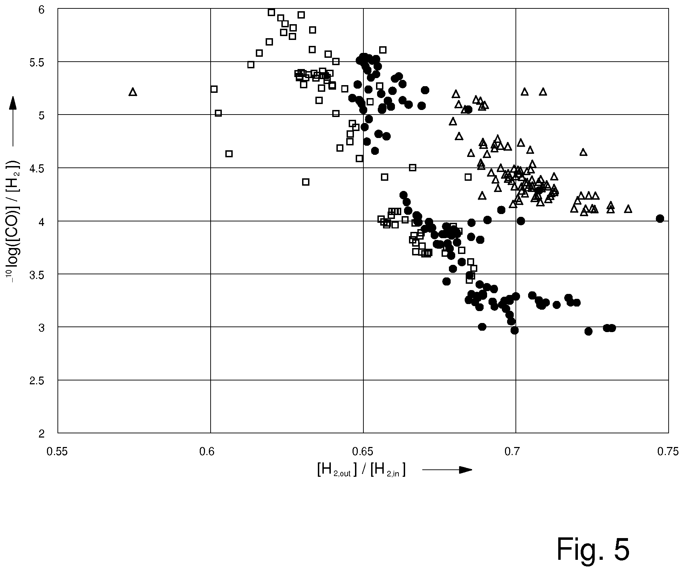

Fig. 5 shows the results of separating a gas mixture of hydrogen, carbon monoxide, carbon dioxide and methane to which nitrogen has been added. The gas mixture was admitted into separation device 40 of fig. 1 via distribution conduit 8, where it was mixed with pure nitrogen gas from transport conduit 22, and wherein the hydrogen product gas was discharged via manifold 9. The figure shows the measured purity (expressed as negative 10-logarithm of the relative concentration of carbon monoxide in the hydrogen product gas) as a function of the yield (expressed as the ratio of the mass flow of hydrogen in the product gas discharged via manifold 9 and the mass flow of hydrogen in the reformate admitted via distribution conduit 8) for three situations in which respectively 0 slm (standard litre per minute) of nitrogen gas (open squares □), 4 slm of nitrogen gas (filled circles ●) and 12 slm of nitrogen gas (open triangles Δ) was added to the gas mixture to be separated.

## Claims

1. Method for separating a first gas mixture (A,C) of a first gas (A) and at least one second gas (C) into a first gas (A) and at least one second gas (C) according to a pressure swing adsorption process (PSA process), comprising of adsorbing at least the second gas (C) in an adsorption mass (5) provided in each vessel of a number of vessels (1, 2, 3, 4), wherein the adsorption strength for the first gas (A) is smaller than the adsorption strength for the second gas (C) and wherein each vessel (1, 2, 3, 4) has at least one inlet (6) and one outlet (7), wherein in each of said vessels (1, 2, 3, 4) the following steps are to be distinguished of:
(i) admitting the gas mixture for a predetermined period into a first vessel (1) via an inlet (6) of said vessel (1), and discharging a separated product gas via an outlet (7) of said vessel (1), followed by admitting the gas mixture into a second vessel (2) while continuing the discharge of the product gas from the first vessel (1), followed by
(ii) discharging purge gas from the first vessel (1) via its outlet (7),
(iii) discharging off-gas from the first vessel (1) via its inlet (6),
(iv) admitting purge gas into the first vessel (1) via its outlet (7), and discharging off-gas from said vessel (1) via its inlet (6), and
(v) admitting a separated product gas into the first vessel (1) until the pressure in the first vessel (1) has reached a predetermined value, after which admission of the gas mixture into the first vessel (1) begins, and the steps are repeated beginning with step (i), **characterized in that** prior to step (i) a third gas (B) is added to the gas mixture, wherein the adsorption strength of the third gas is greater than the adsorption strength of the first gas (A) and smaller than the adsorption strength of the second gas (C).

2. Method as claimed in claim 1, wherein the third gas is an inert gas.

3. Method as claimed in either of the claims 1-2,
wherein the gas mixture for separating comprises hydrogen gas (H₂) and at least one of the gases carbon monoxide (CO), carbon dioxide (CO₂) and methane (CH₄), and the product gas is hydrogen gas (H₂).

4. Method as claimed in claim 3, wherein the gas mixture for separating is provided as reformate from a reformer which is supplied with a feed gas comprising hydrocarbon, and wherein the third gas is nitrogen gas (N₂).

5. Method as claimed in claim 4, wherein the nitrogen gas (N₂) is added to the reformate from the reformer.

6. Method as claimed in claim 4, wherein the nitrogen gas (N₂) is added to the feed gas of the reformer.

7. Method as claimed in claim 6, wherein the nitrogen gas (N₂) forms a constituent of the off-gas discharged during at least one of the steps (iii) and (iv).

8. Method as claimed in any of the claims 4-6, wherein the nitrogen gas (N₂) forms a constituent of a mixture of the product gas (H₂) and nitrogen gas (N₂) following use of this mixture as oxygen-free ambient gas in a process space.

9. Device (40, 50, 60, 70) for producing a product gas mixture of nitrogen gas (N₂) and hydrogen gas (H₂) from nitrogen gas (N₂) and a hydrocarbon gas, comprising
a nitrogen source (18),
a reformer (20) for converting the hydrocarbon gas to a first gas mixture of hydrogen gas (H₂) and at least one of the gases carbon monoxide (CO), carbon dioxide (CO₂) and methane (CH₄),
a separating device (10) for separating the first gas mixture according to a pressure swing adsorption process (PSA process) into hydrogen gas (H₂) and at least one of the gases carbon monoxide (CO), carbon dioxide (CO₂) and methane (CH₄), comprising a number of vessels (1, 2, 3, 4), wherein each vessel (1, 2, 3, 4) has at least one inlet (6) and one outlet (7), and an adsorption mass (5) is provided in each of these vessels (1, 2, 3, 4) for adsorbing at least one of the gases carbon monoxide (CO), carbon dioxide (CO₂) and methane (CH₄), and
a product gas space (17),
wherein means (22, 23) are provided for adding nitrogen gas (N₂) to the first gas mixture, **characterized in that**
the product gas space (17) is adapted for admitting therein the nitrogen gas (N₂) and the separated hydrogen gas (H₂) in order to obtain the gas mixture of nitrogen gas (N₂) and hydrogen gas (H₂), and
conduit means (19) are provided for transport of nitrogen gas (N2) from the nitrogen source (18) to the product gas space (17).

10. Device (40) as claimed in claim 9, **characterized in that** the means for adding are provided by conduit means (22) for guiding nitrogen gas (N₂) from the nitrogen source (18) to the inlet (6) of the at least one vessel (1, 2, 3, 4).

11. Device (50) as claimed in claim 9, **characterized in that** the means for adding are provided by conduit means (23) for guiding at least a part of the gas mixture out of the product gas space (17) to the inlet (6) of the at least one vessel (1, 2, 3, 4).

12. Device (60) as claimed in claim 9, **characterized in that** the means for adding are provided by conduit means (24) for guiding at least part of the gas mixture out of the product gas space (17) to the reformer (20).

13. Device (70) as claimed in claim 9, **characterized in that** the means for adding are provided by conduit means (25) for guiding at least a part of off-gas discharged from the outlets (15) to the reformer (20).

14. Device (40, 50, 60, 70) as claimed in any of the claims 9-13, **characterized in that** the number of vessels comprises at least two vessels (1, 2, 3).

15. Device (40, 50, 60, 70) as claimed in any of the claims 9-13, **characterized in that** the number of vessels comprises four vessels (1, 2, 3, 4).

## Patentansprüche

1. Verfahren zum Trennen eines ersten Gasgemisches (A, C) aus einem ersten Gas (A) und mindestens einem zweiten Gas (C) in ein erstes Gas (A) und mindestens ein zweites Gas (C) nach einem Druckwechseladsorptionsverfahren (PSA-Verfahren), umfassend das Adsorbieren mindestens des zweiten Gases (C) in einer Adsorptionsmasse (5), die in jedem Behälter einer Anzahl von Behältern (1, 2, 3, 4) bereitgestellt ist, wobei die Adsorptionsstärke für das erste Gas (A) kleiner ist als die Adsorptionsstärke für das zweite Gas (C) und wobei jeder Behälter (1, 2, 3, 4) mindestens einen Einlass (6) und einen Auslass (7) aufweist, wobei in jedem der Behälter (1, 2, 3, 4) die folgenden Schritte zu unterscheiden sind:
(i) Einlassen des Gasgemischs für eine vorbestimmte Zeitspanne in einen ersten Behälter (1) über einen Einlass (6) des Behälters (1) und Abführen eines abgetrennten Produktgases über einen Auslass (7) des Behälters (1), gefolgt vom Einlassen des Gasgemischs in einen zweiten Behälter (2), während das Abführen des Produktgases aus dem ersten Behälter (1) fortgesetzt wird, gefolgt von
(ii) Abführen von Spülgas aus dem ersten Behälter (1) über dessen Auslass (7),
(iii) Abführen von Abgas aus dem ersten Behälter (1) über dessen Einlass (6),
(iv) Einlassen von Spülgas in den ersten Behälter (1) über dessen Auslass (7) und Abführen von Abgas aus diesem Behälter (1) über dessen Einlass (6), und
(v) Einlassen eines abgetrennten Produktgases in den ersten (v) Einlassen eines abgetrennten Produktgases in den ersten Behälter (1), bis der Druck im ersten Behälter (1) einen vorbestimmten Wert erreicht hat, woraufhin das Einlassen des Gasgemisches in den ersten Behälter (1) beginnt und die Schritte beginnend mit Schritt (i) wiederholt werden,
**dadurch gekennzeichnet, dass** vor Schritt (i) ein drittes Gas (B) dem Gasgemisch hinzugefügt wird, wobei die Adsorptionsstärke des dritten Gases größer als die Adsorptionsstärke des ersten Gases (A) und kleiner als die Adsorptionsstärke des zweiten Gases (C) ist.

2. Verfahren nach Anspruch 1, wobei das dritte Gas ein Inertgas ist.

3. Verfahren nach einem der Ansprüche 1 - 2, wobei das zu trennende Gasgemisch Wasserstoffgas (H₂) und mindestens eines der Gase Kohlenmonoxid (CO), Kohlendioxid (CO₂) und Methan (CH₄) umfasst, und das Produktgas Wasserstoffgas (H₂) ist.

4. Verfahren nach Anspruch 3, wobei das zu trennende Gasgemisch als Reformat aus einem Reformer bereitgestellt ist, welchem ein Kohlenwasserstoff enthaltendes Speisegas zugeführt wird, und
wobei das dritte Gas Stickstoffgas (N₂) ist.

5. Verfahren nach Anspruch 4, wobei das Stickstoffgas (N₂) dem Reformat aus dem Reformer hinzugefügt wird.

6. Verfahren nach Anspruch 4, wobei das Stickstoffgas (N₂) dem Speisegas des Reformers hinzugefügt wird.

7. Verfahren nach Anspruch 6, wobei das Stickstoffgas (N₂) einen Bestandteil des Abgases bildet, das während mindestens eines der Schritte (iii) und (iv) abgeführt wird.

8. Verfahren nach einem der Ansprüche 4 - 6, wobei das Stickstoffgas (N₂) einen Bestandteil eines Gemisches aus dem Produktgas (H₂) und Stickstoffgas (N₂) nach Verwendung dieses Gemisches als sauerstofffreies Umgebungsgas in einem Prozessraum bildet.

9. Vorrichtung (40, 50, 60, 70) zur Herstellung eines Produktgasgemisches aus Stickstoffgas (N₂) und Wasserstoffgas (H₂) aus Stickstoffgas (N₂) und einem Kohlenwasserstoffgas, umfassend
eine Stickstoffquelle (18),
einen Reformer (20) zur Umwandlung des Kohlenwasserstoffgases in ein erstes Gasgemisch aus Wasserstoffgas (H₂) und mindestens einem der Gase Kohlenmonoxid (CO), Kohlendioxid (CO₂) und Methan (CH₄),
eine Trennvorrichtung (10) zur Trennung des ersten Gasgemisches nach einem Druckwechseladsorptionsverfahren (PSA-Verfahren) in Wasserstoffgas (H₂) und mindestens eines der Gase Kohlenmonoxid (CO), Kohlendioxid (CO₂) und Methan (CH₄), umfassend eine Anzahl von Behältern (1, 2, 3, 4), wobei jeder Behälter (1, 2, 3, 4) mindestens einen Einlass (6) und einen Auslass (7) aufweist und in jedem dieser Behälter (1, 2, 3, 4) eine Adsorptionsmasse (5) zum Adsorbieren mindestens eines der Gase Kohlenmonoxid (CO), Kohlendioxid (CO₂) und Methan (CH₄) bereitgestellt ist, und
einen Produktgasraum (17),
wobei Mittel (22, 23) zum Hinzufügen von Stickstoffgas (N₂) zu dem ersten Gasgemisch bereitgestellt sind, **dadurch gekennzeichnet, dass**
der Produktgasraum (17) dazu ausgebildet ist, das Stickstoffgas (N₂) und das abgetrennte Wasserstoffgas (H₂) darin einzulassen, um das Gasgemisch aus Stickstoffgas (N₂) und Wasserstoffgas (H₂) zu erhalten, und
Leitungsmittel (19) für den Transport von Stickstoffgas (N₂) von der Stickstoffquelle (18) zum Produktgasraum (17) bereitgestellt sind.

10. Vorrichtung (40) nach Anspruch 9, **dadurch gekennzeichnet, dass** die Mittel zum Hinzufügen durch Leitungsmittel (22) zum Leiten von Stickstoffgas (N₂) von der Stickstoffquelle (18) zum Einlass (6) des mindestens einen Behälters (1, 2, 3, 4) bereitgestellt sind.

11. Vorrichtung (50) nach Anspruch 9, **dadurch gekennzeichnet, dass** die Mittel zum Hinzufügen durch Leitungsmittel (23) zum Leiten mindestens eines Teils des Gasgemisches aus dem Produktgasraum (17) zum Einlass (6) des mindestens einen Behälters (1, 2, 3, 4) bereitgestellt sind.

12. Vorrichtung (60) nach Anspruch 9, **dadurch gekennzeichnet, dass** die Mittel zum Hinzufügen durch Leitungsmittel (24) bereitgestellt sind, um zumindest einen Teil des Gasgemisches aus dem Produktgasraum (17) zum Reformer (20) zu leiten.

13. Vorrichtung (70) nach Anspruch 9, **dadurch gekennzeichnet, dass** die Mittel zum Hinzufügen durch Leitungsmittel (25) bereitgestellt sind, um mindestens einen Teil des von den Auslässen (15) abgeführten Abgases zum Reformer (20) zu leiten.

14. Vorrichtung (40, 50, 60, 70) nach einem der Ansprüche 9 - 13, **dadurch gekennzeichnet, dass** die Anzahl der Behälter mindestens zwei Behälter (1, 2, 3) umfasst.

15. Vorrichtung (40, 50, 60, 70) nach einem der Ansprüche 9 -13, **dadurch gekennzeichnet, dass** die Anzahl der Behälter vier Behälter (1, 2, 3, 4) umfasst.

## Revendications

1. Procédé de séparation d'un premier mélange gazeux (A, C) d'un premier gaz (A) et d'au moins un deuxième gaz (C) en un premier gaz (A) et au moins un deuxième gaz (C) selon un processus d'adsorption modulée en pression (processus PSA), comprenant l'adsorption d'au moins le deuxième gaz (C) dans une masse d'adsorption (5) prévue dans chaque récipient d'un nombre de récipients (1, 2, 3, 4), dans lequel la force d'adsorption pour le premier gaz (A) est plus petite que la force d'adsorption pour le deuxième gaz (C) et dans lequel chaque récipient (1, 2, 3, 4) a au moins une entrée (6) et une sortie (7), dans lequel dans chacun desdits récipients (1, 2, 3, 4) les étapes suivantes doivent être distinguées :
(i) l'admission du mélange gazeux pendant une période prédéterminée dans un premier récipient (1) via une entrée (6) dudit récipient (1), et l'évacuation d'un gaz produit séparé via une sortie (7) dudit récipient (1), suivie par l'admission du mélange gazeux dans un deuxième récipient (2) tout en poursuivant l'évacuation du gaz produit du premier récipient (1), suivie par
(ii) l'évacuation de gaz de purge du premier récipient (1) via sa sortie (7),
(iii) l'évacuation de gaz résiduel du premier récipient (1) via son entrée (6),
(iv) l'admission de gaz de purge dans le premier récipient (1) via sa sortie (7), et l'évacuation de gaz résiduel dudit récipient (1) via son entrée (6), et
(v) l'admission d'un gaz produit séparé dans le premier récipient (1) jusqu'à ce que la pression dans le premier récipient (1) ait atteint une valeur prédéterminée, après quoi l'admission du mélange gazeux dans le premier récipient (1) commence, et les étapes sont répétées en commençant par l'étape (i), **caractérisé en ce qu'**avant l'étape (i) un troisième gaz (B) est ajouté au mélange gazeux, dans lequel la force d'adsorption du troisième gaz est plus grande que la force d'adsorption du premier gaz (A) et plus petite que la force d'adsorption du deuxième gaz (C).

2. Procédé selon la revendication 1, dans lequel le troisième gaz est un gaz inerte.

3. Procédé selon l'une ou l'autre des revendications 1 et 2, dans lequel le mélange gazeux de séparation comprend de l'hydrogène gazeux (H₂) et au moins l'un parmi du monoxyde de carbone (CO), du dioxyde de carbone (CO₂) et du méthane (CH₄) gazeux, et le gaz produit est de l'hydrogène gazeux (H₂).

4. Procédé selon la revendication 3, dans lequel le mélange gazeux de séparation est fourni sous la forme d'un reformat provenant d'un reformeur qui est alimenté avec un gaz d'apport comprenant un hydrocarbure, et dans lequel le troisième gaz est de l'azote gazeux (N₂).

5. Procédé selon la revendication 4, dans lequel l'azote gazeux (N₂) est ajouté au reformat provenant du reformeur.

6. Procédé selon la revendication 4, dans lequel l'azote gazeux (N₂) est ajouté au gaz d'apport du reformeur.

7. Procédé selon la revendication 6, dans lequel l'azote gazeux (N₂) forme un constituant du gaz résiduel évacué pendant au moins l'une des étapes (iii) et (iv).

8. Procédé selon l'une quelconque des revendications 4 à 6, dans lequel l'azote gazeux (N₂) forme un constituant d'un mélange du gaz produit (H₂) et d'azote gazeux (N₂) à la suite de l'utilisation de ce mélange en tant que gaz ambiant dépourvu d'oxygène dans un espace de traitement.

9. Dispositif (40, 50, 60, 70) de production d'un mélange de gaz produit d'azote gazeux (N₂) et d'hydrogène gazeux (H₂) à partir d'azote gazeux (N₂) et d'un hydrocarbure gazeux, comprenant
une source d'azote (18),
un reformeur (20) pour convertir l'hydrocarbure gazeux en un premier mélange gazeux d'hydrogène gazeux (H₂) et d'au moins l'un parmi les monoxyde de carbone (CO), dioxyde de carbone (CO₂) et méthane (CH₄) gazeux,
un dispositif de séparation (10) pour séparer le premier mélange gazeux selon un processus d'adsorption modulée en pression (processus PSA) en hydrogène gazeux (H₂) et au moins l'un parmi les monoxyde de carbone (CO), dioxyde de carbone (CO₂) et méthane (CH₄) gazeux, comprenant un nombre de récipients (1, 2, 3, 4), dans lequel chaque récipient (1, 2, 3, 4) a au moins une entrée (6) et une sortie (7), et une masse d'adsorption (5) est fournie dans chacun de ces récipients (1, 2, 3, 4) pour adsorber au moins l'un des monoxyde de carbone (CO), dioxyde de carbone (CO₂) et méthane (CH₄) gazeux, et
un espace de gaz produit (17),
dans lequel des moyens (22, 23) sont prévus pour ajouter de l'azote gazeux (N₂) au premier mélange gazeux, **caractérisé en ce que**
l'espace de gaz produit (17) est adapté pour y admettre l'azote gazeux (N₂) et l'hydrogène gazeux (H₂) séparé afin d'obtenir le mélange gazeux d'azote gazeux (N₂) et d'hydrogène gazeux (H₂), et
des moyens de conduit (19) sont prévus pour le transport d'azote gazeux (N₂) de la source d'azote (18) à l'espace de gaz produit (17).

10. Dispositif (40) selon la revendication 9, **caractérisé en ce que** les moyens d'ajout sont fournis par des moyens de conduit (22) pour guider l'azote gazeux (N₂) de la source d'azote (18) à l'entrée (6) de l'au moins un récipient (1, 2, 3, 4).

11. Dispositif (50) selon la revendication 9, **caractérisé en ce que** les moyens d'ajout sont fournis par des moyens de conduit (23) pour guider au moins une partie du mélange gazeux hors de l'espace de gaz produit (17) jusqu'à l'entrée (6) de l'au moins un récipient (1, 2, 3, 4).

12. Dispositif (60) selon la revendication 9, **caractérisé en ce que** les moyens d'ajout sont fournis par des moyens de conduit (24) pour guider au moins une partie du mélange gazeux hors de l'espace de gaz produit (17) jusqu'au reformeur (20).

13. Dispositif (70) selon la revendication 9, **caractérisé en ce que** les moyens d'ajout sont fournis par des moyens de conduit (25) pour guider au moins une partie du gaz résiduel évacué depuis les sorties (15) jusqu'au reformeur (20).

14. Dispositif (40, 50, 60, 70) selon l'une quelconque des revendications 9 à 13, **caractérisé en ce que** le nombre de récipients comprend au moins deux récipients (1, 2, 3).

15. Dispositif (40, 50, 60, 70) selon l'une quelconque des revendications 9 à 13, **caractérisé en ce que** le nombre de récipients comprend quatre récipients (1, 2, 3, 4).
